# EUROPEAN PATENT APPLICATION

(11) **EP 0 676 460 A1**
(43) Date of publication of application: **11.10.1995**
(21) Application number: 94929695.8
(22) Date of filing: 28.09.1994
(51) Int. Cl.: C09K 5/04

(54) **OZONE-FRIENDLY WORKING MIXTURE FOR REFRIGERATION EQUIPMENT**

(30) Priority: 29.09.1993 RU 93046020
(71) Applicant: COMPLEX TECHNOLOGY & ENERGOTECHNOLOGY DEVELOPING CENTRE "KORTES", Moscow, 123182 (RU); COOPERATIVE "ELEGAZ", Moscow 109429 (RU)
(72) Inventor: MAZURIN, Igor Mikhailovich, Moscow, 111141 (RU); STOLYAREVSKY, Anatoly Yakovlevich, Moscow, 125167 (RU); DORONIN, Alexander Sergeevich, Moscow, 123557 (RU); SHEVTSOV, Alexandr Vasilievich, Moscow, 123182 (RU)
(74) Representative: Rambelli, Paolo
(86) International application number: RU9400225
(87) International publication number: WO9509214

(57) **Abstract**

The invention relates to refrigeration technology and can be used in medium-temperature refrigeration equipment, air conditioners including those used in motor vehicles, in heat pumps, and for research purposes. According to the present invention, the proposed ozone-friendly working mixtures contain sulphur hexafluoride and at least one of the following substances: octafluoropropane, octafluorocyclobutane, decafluorobutane. In addition, hexafluoroethane and/or tetrafluoromethane can be added to the mixture in quantities of up to 30 wt %. The optimal compositions of appropriate binary mixtures are also proposed. These ozone-friendly working mixtures can be used in existing refrigeration equipment without any fundamental modifications being made to that equipment.

## Description

### Field of the Invention

The invention relates to refrigeration technology and can be used in medium-temperature refrigeration equipment, air conditioners including those used in motor vehicles, in heat pumps, and for research purposes.

### Background of the Invention

Known in the art is a use of sulphur hexafluoride (SF₆) as a refrigerant (US,A,1778033). The advantages of said refrigerant are a sufficiently high refrigeration efficiency and environmental safety.

However, sulphur hexafluoride has a substantially high factor of vapor pressure within the range of industrial refrigeration at temperature from -20 to -35°C. This hinders utilization of said refrigerant in a medium-temperature refrigeration equipment.

To the prior art is known a number of working sulphur hexafluoride (SF₆) based mixtures for refrigeration equipment, having a lower vapor pressure at appropriate conditions, than sulphur hexafluoride.

Simultaneously, presence of sulphur hexafluoride in conventional refrigeration equipment ensures a reduction of energy consumption of apparatuses and technological processes owing to the abnormally low specific heat ratio of sulphur hexafluoride SF₆ (1.02-1.04).

For comparison, the same ratio for octafluropropane (C₃F₈) is 1.13, while for octafluorocyclobutane it is 1.07.

Known in the art is, for example, a working mixture for refrigeration equipment, comprising sulphur hexafluoride (SF₆) and difluoromethane (CHClF₂) (US,A,3642639).

The aforementioned working mixture for refrigeration equipment has an essentially higher refrigeration capacity than each component thereof, taken separately. Said working mixture can be most efficiently utilized in low-temperature refrigeration equipment within the boiling point range from -25 to -40°C.

At the same time, the conventional working mixture comprises a fluorine-containing component giving the mixture ozone depleting properties.

As known, under international agreements on the Earth's ozone layer protection, refrigerants of such type should be completely taken out from utilization by the year 2020.

There exists several approaches to develop ozone-friendly refrigerants. Particularly, known is an ozone-friendly working mixture for refrigeration equipment, consisting of two fluorocarbons, namely, of octafluoropropane (C₃F₈) and octacyclobutane (C₄F₈), molecules of which do not comprise chlorine atoms (SU,A,1781279).

The aforementioned working mixture meets modern requirements to ozone safety.

However, the component concentration range, most efficient from point of reducing energy consumption, provides a high boiling point of a working mixture, which hampers the mixture utilization in household and industrial low- and medium-temperature refrigeration equipment. At the most efficient relationship of octafluoropropane and octafluorocyclobutane of 40:60, respectively, the boiling point is -19°C, while at the relationship of 36:65, it is -22°C.

To the art is also known an ozone-friendly working mixture for refrigeration equipment, comprising sulphur hexafluoride (SF₆) and fluocarbon, such as trifluoromethane (CHF₃) (US,3719603,1973).

In contrast to previously mentioned working mixture, said mixture can be most efficiently utilized only in a special-purpose refrigeration equipment operating at temperature lower than -70°C. As known, the range of temperatures at which household refrigeration equipment and air conditioners operate most efficiently, is several tens of degrees higher.

Furthermore, a molecule of trifluoromethane (CHF₃) possesses a relatively low dissociation energy, lower than 370 kilojoule/mole, which makes said component of the mixture insufficiently stable with respect to destruction under a long maintenance of the refrigeration equipment. Due to destruction of trifluoromethane and appearance of nonrecombining decomposition products as a result of chemical reactions, conditions of normal maintenance of refrigeration equipment are violated, which can cause a failure thereof.

### Summary of the Invention

It is an object of the present invention to provide an ozone-friendly working sulphur hexafluoride based mixture for refrigeration equipment operating within a medium temperature range under pressures, not exceeding a pressure required when solely sulhur hexafluoride is used as a refrigerant.

It is still another object of the present invention to reduce energy consumption and to improve maintenance reliability of refrigeration equipment.

The aforementioned object is attained by an ozone-friendly working mixture for refrigeration equipment, comprising sulphur hexafluoride and fluocarbon, wherein fluocarbon is at least one substance from the group consisting of octafluoropropane (C₃F₈), octafluorocyclobutane (cC₄F₈), decafluorobutane (C₄F₁₀).

According to one embodiment of the present invention, the working mixture comprises 0.1-64 weight percent of sulphur hexafluoride and 36-99.9 weight percent of octafluoropropane.

According to further embodiment of the present invention, the working mixture comprises 0.1-86.5 weight percent of sulphur hexafluoride and 36-99.9 weight percent of octafluorocyclobutane.

According to one more embodiment of the invention, the working mixture according to the present invention comprises 0.1-85 weight percent of sulphur hexafluoride and 15-99.9 weight percent of decafluorobutane.

Furthermore, hexafluoroethane (C₂F₆) and/or tetrafluoromethane (CF₄) can be added to the working mixture according to the present invention in quantities of up to 30 weight percent.

Use in an ozone-friendly sulphur hexafluoride-containing working mixture of at least one substance selected from the group consisting of octafluoropropane, octafluorocyclobutane and decafluorobutane having boiling points lower than that of trifluorometane, and vapor pressure at normal atmosphere conditions lower than that of sulphur hexafluoride, instead of trifluoromethane, allows to attain the object of the invention, i.e. to provide an efficient ozone-friendly refrigerant for medium-temperature refrigeration equipment.

A reduction of energy consumption by refrigeration equipment charged with the ozone-friendly working mixture according to the invention is attained due to an increased, as compared to the prior art, efficiency of the invented refrigerants in the Rankine's refrigeration cycle. It is known that a relationship between a difference in specific volumes of vapor (Vᵥ) and liquid (Vₗ) in a two-phase equilibrium system and a specific heat of vaporization (q), multiplied by a temperature (T), is proportional to dT/dP (the Clapeyron-Clausius' equation). Thus, an increase of the relationship (Vᵥ-Vₗ)/q allows to reduce a refrigeration temperature level under a fixed pressure gradient, i.e. to freese, for example, food-stuff, at lower temperature, which ensures a general reduction of energy consumption by a refrigeration equipment, all remaining basic characteristics of the refrigeration apparatus being fixed.

The aimed improvement of a maintenance reliability of refrigeration equipment is achieved due to the fact that all working mixtures according to the present invention have molecular weights exceeding those of the prior art mixtures. Owing to a direct dependance of improving dielectric characteristics of such substances on their molecular weight increase, it can be stated that the mixtures of the invention improve a maintenance reliability of refrigeration equipment due to a reduction of electrical break-through probability, particularly, in compressors.

Additionally, molecules of octafluoropropane, octafluorocyclobutane, decafluorobutane have a dissociation energy above 420 kilojoule/mole, i.e. they are more resistant to destruction than a molecule of trifluoromethane ( ε < 370 kilojoule/mole). This, in turn, reduces a probability of forming nonrecombining decomposition products, while maintaining optimal conditions of the refrigeration equipment performance.

The component concentration ranges of the working mixtures according to the present invention depend on the following factors. The upper limit of 99.9 weight percent content of substances selected from the group consisting of octafluoropropane, octafluorocyclobutane, decafluorobutane in the working mixture is determined by a minimum percentage of sulphur hexafluoride, at which the energy consumption effect is reliably fixed.

A lower concentration limit for each substance from the abovementioned group is determined by a critical temperature (T_{cr}) for each type of a binary mixture, which should not be lower than +55°C, i.e. a temperature value recognised as a condensation temperature for medium- and high-temperature compressors of refrigeration equipment. Percentage reduction of each of the components above as compared to the lower limit will result in reducing T_{cr} of the mixture, which, in turn, eliminates a possibility to implement the cycle at the refrigeration apparatus, insofar as the mixture will not condense, and, hence, cold will not be generated.

A composition of three, four, five and six component mixtures formed of sulphur hexafluoride, octafluoropropane, octafluorocyclobutane, decafluorobutane with addition of hexafluoroethane and tetrafluoromethane should be determined by similar conditions for T_{cr} of the mixture.

### Brief Description of the Drawings

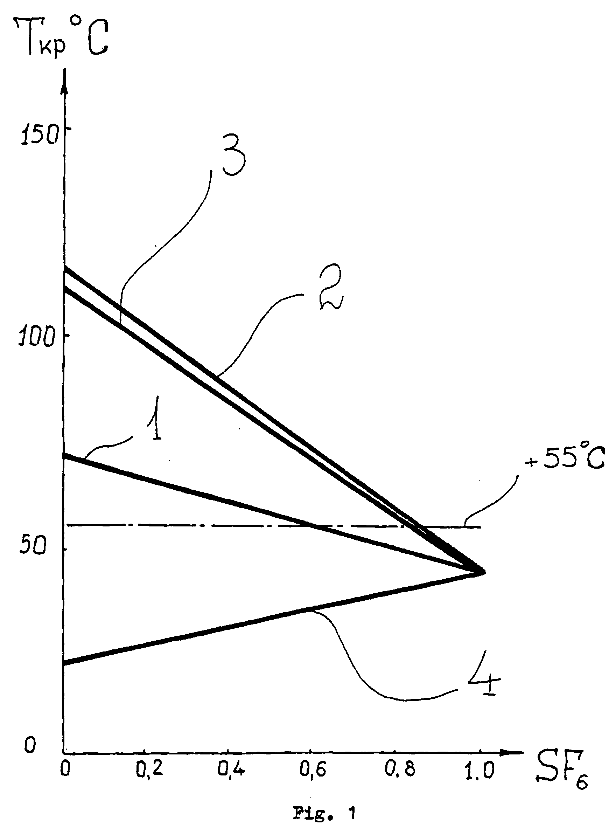

Fig.1 illustrates a plot of variation of critical temperature T_{cr} of binary working mixtures with sulphur hexafluoride (SF₆) concentration.
   1 is a mixture of sulphur hexafluoride and octafluoropropane (C₃F₈)
   2 is a mixture of sulphur hexafluoride and octafluorocyclobutane (cC₄F₈)
   3 is a mixture of sulphur hexafluoride and decafluorobutane (C₄F₁₀)
   4 is a mixture of sulphur hexafluoride and trifluoromethane (CHF₃)

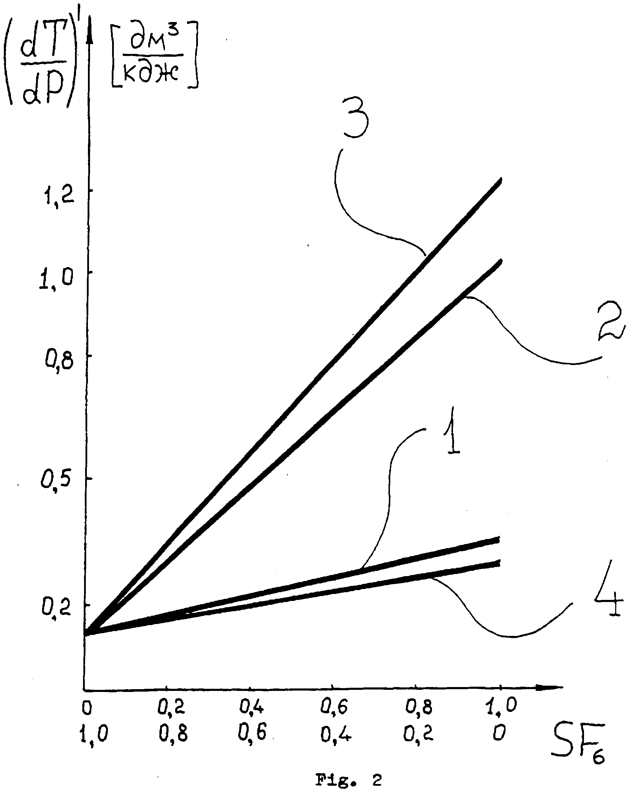

Fig.2 illustrates a variation of a relationship between a difference in specific volumes of vapor and liquid in a two-phase equilibrium system and a specific temperature of vaporization with sulphur hexafluoride (SF₆) concentration, at temperature of 253 K.
   1 is a mixture of sulphur hexafluoride and octafluoropropane (C₃F₈)
   2 is a mixture of sulphur hexafluoride and octafluorocyclobutane (cC₄F₈)
   3 is a mixture of sulphur hexafluoride and decafluorobutane (C₄F₁₀)
   4 is a mixture of sulphur hexafluoride and trifluoromethane (CHF₃).
Fig.3 depicts a plot of variation of binary working mixture molecular weights with sulphur hexafluoride concentration.
   1 is a mixture of sulphur hexafluoride and octafluoropropane (C₃F₈)
   2 is a mixture of sulphur hexafluoride and octafluorocyclobutane (cC₄F₈)
   3 is a mixture of sulphur hexafluoride and decafluorobutane (C₄F₁₀)
   4 is a mixture of sulphur hexafluoride and trifluoromethane (CHF₃)

The aforementioned advantages and features of the invention will become more readily apparent from the following consideration of the drawings attached, description of the preferred embodiment and calculations of experimental data for efficiency of the invented ozone-friendly working mixtures in the Rankine's refrigeration cycle, and values of critical temperatures (T_{cr}) and boiling points (T_{boil}) of mixtures at one atmosphere.

### Brief Description of the Preferred Embodiment

A working mixture (binary or multi-component) is prepared on weight basis, the mixture composition being controlled.

Inasmuch as pressure of all components of the mixture does not exceed the atmospheric pressure at ambient temparature, the addition of any mixture component is performed by a simple forcing over gas into a volume having a lower pressure. The weighting-out allows to be correct within ±0.1 per cent.

A mixture consisting of sulphur hexafluoride (SF₆) and decafluorobutane (C₄F₁₀) is prepared as follows.

Decafluorobutane is introduced into a reservoir and after increasing weight by 15g, the gas delivery is terminated. Next, the reservoir is connected to a flask containing sulphur hexafluoride. Suphur hexafluoride, having a higher vapor pressure, is forced over to the reservoir containing decafluorobutane. The reservoir is weighted, after its weight increased by 85 g, the flask with sulphur hexafluoride is disconnected from the reservoir.

If necessary, after delay, the composition of the prepared mixture is tested at a chromotograph or mass-spectrometer.

Mixtures consisting of three and more component systems are obtained similarly, under a gradual increase of the mixture pressure.

The properties of the prepared low-boiling mixtures as compared to the prior art are listed in Table below. In the Table, T_{cr} stands for a minimum permissible critical temperature of the mixture, T_{boil} stands for a mixture boiling point at one atmosphere, and RE stands for a refrigerant efficiency in the Rankine refrigeration cycle.

**TABLE**

| Composition wt.% | T_{cr} (°C) | T_{boil} (°C) | RE |
|---|---|---|---|
| 1 | 2 | 3 | 4 |
| 0.1 SF₆, 99.9 C₃F₈ | 72 | -37 | 0.37 |
| 30 SF₆, 70 C₃F₈ | 64 | -44 | 0.30 |
| 64 SF₆, 36 C₃F₈ | 55 | -45 | 0.24 |
| 0.5 SF₆, 99.5 cC₄F₈ | 115 | -6 | 1.04 |
| 40 SF₆, 60 cC₄F₈ | 88 | -29 | 0.91 |
| 86.5 SF₆, 13.5 cC₄F₈ | 55 | -44 | 0.33 |
| 0.5 SF₆, 99.5 C₄F₁₀ | 113 | -2 | 1.20 |
| 40 SF₆, 60 C₄F₁₀ | 86 | -26 | 0.80 |
| 85 SF₆, 15 C₄F₁₀ | 55 | -44.5 | 0.37 |
| 16 SF₆, 4cC₄F₈, 80 C₃F₈ | 68 | -37 | 0.25 |
| 23 SF₆, 12 cC₄F₈, 65 C₃F₈ | 64 | -41 | 0.35 |
| 45 SF₆, 15 cC₄F₈, 40 C₃F₈ | 57 | -44 | 0.40 |
| 50 SF₆, 20 cC₄F₈, 30 C₃F₈ | 55 | -46 | 0.45 |
| 10 SF₆, 5 C₄F₁₀, 85 C₃F₈ | 71 | -35 | 0.35 |
| 25 SF₆, 12 C₄F₁₀, 63 C₃F₈ | 68 | -36 | 0.40 |
| 40 SF₆, 20 C₄F₁₀, 40 C₃F₈ | 62 | -41 | 0.38 |
| 40 SF₆, 30 C₄F₁₀, | | | |
| 30 cC₄F₈ | 85 | -25 | 0.7 |
| 30 C₂F₆, 56 C₄F₈, 14 SF₆ | 77 | -36 | 0.6 |
| 30 CF₄, 56 cC₄F₈, 14 SF₆ | 57 | -51 | 0.6 |
| 30 C₂F₆, 56 cC₄F₈, | | | |
| 13 SF₆, ICF₄ | 76 | -37 | 0.6 |
| 15 SF₆, 4cC₄F₈ | | | |
| 80 C₃F₈, ICF₄ | 67 | -38 | 0.6 |

| Prior Art: | | | |
|---|---|---|---|
| 1 SF₆, 99 CHF₃ | 25 | -82 | 0.3 |
| 35 SF₆, 65 CHF₃ | 45 | -50 | 0.15 |

As follows from the drawings and data listed in the Table, the compositions of the ozone-friendly working mixtures according to the present invention allow to attain the object of the present invention, i.e. to provide a normal operation of a refrigeration equipment under a wide range of weather conditions (T_{cr} > 55°C) and temperatures in an evaporator (a freezing chamber) from -5°C to -52°C in one-step refrigeration equipment, at a simultaneous improvement of parameters affecting the energy consumption. Thus, a value of refrigerant efficiency factor in the Rankine refrigeration cycle (column 4 in the Table), equal to (dT/dP), for the invented working mixtures under a medium-temperature range, exceeds that of the prior art.

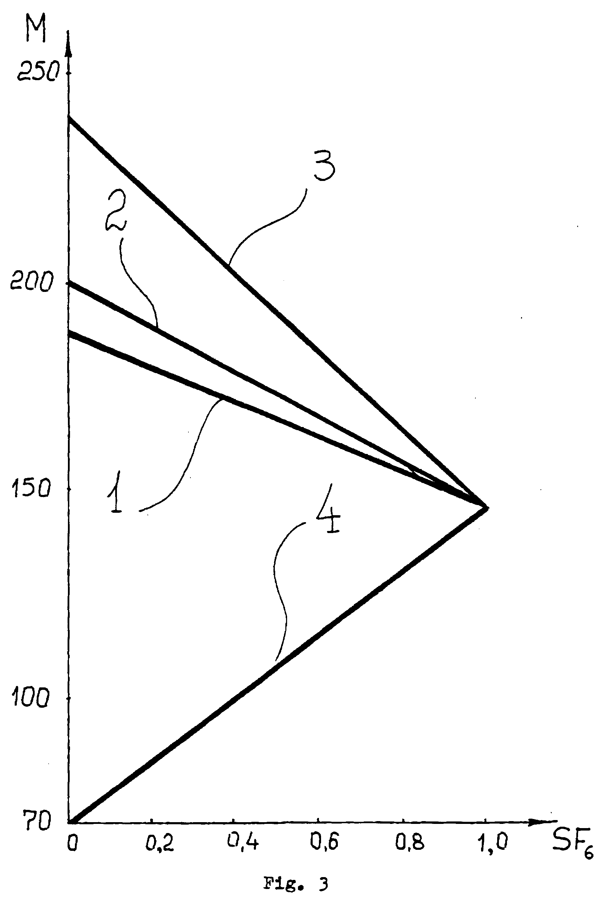

As shown in Fig.3, ozone-friendly mixtures for refrigeration equipment according to the present invention have molecular weights exceeding those of the prior art mixtures, which, alongside with increased molecule dissociation energy, promotes an improvement of maintenance reliability of refrigeration equipment.

### Industrial Applicability

The present invention can be most successfully utilized in medium-temperature refrigeration equipment, air conditioners, including those used in motor vehicles, in heat pumps. The working mixtures of the invention are nonflammable and explosion-proof, ozone-friendly and noncorrosive.

These ozone-friendly working mixtures can be used in existing refrigeration equipment without any fundamental modifications being made to that equipment.

## Claims

1. An ozone-friendly working mixture for refrigeration equipment, comprising sulphur hexafluoride and fluorocarbon, characterized in that fluorocarbon is at least one substance selected from the group consisting of octafluoropropane, octafluorocyclobutane, decafluorobutane.

2. An ozone-friendly working mixture according to claim 1, comprising from 0.1 to 64 weight percent of sulphur hexafluoride and from 36 to 99.9 weight percent of octafluoropropane.

3. An ozone-friendly working mixture according to claim 1, comprising from 0.1 to 86.5 weight percent of sulphur hexafluoride and from 13.5 to 99.5 weight percent of octafluorocyclpropane.

4. An ozone-friendly working mixture according to claim 1, comprising from 0.1 to 85 weight percent of sulphur hexafluoride and from 15 to 99.9 weight percent of decafluotobutane.

5. An ozone-friendly working mixture according to claim 1, additionally comprising up to 30 weight percent of hexafluoroethane and/or tetrafluorometane.
